# EUROPEAN PATENT APPLICATION

(11) **EP 4 803 792 A1**
(43) Date of publication of application: **09.09.2026**
(21) Application number: 26163029.7
(22) Date of filing: 06.03.2026
(51) Int. Cl.: F16L 17/025, F16L 17/035

(54) **SEAL ASSEMBLY**

(30) Priority: 07.03.2025 NL 2039935
(71) Applicant: Wavin B.V., 1118 BK Schiphol (NL)
(72) Inventor: VAN DE POL, Wiecherdina Margrietha, 1118 BK Schiphol (NL); VAN DER SCHEER, Marco, 1118 BK Schiphol (NL); HAITJEMA, Dirk Jan, 1119 BK Schiphol (NL); SEIP, Hilde, 1118 BK Schiphol (NL); PATEL, Umeshkumar Sudam, 1118 BK Schiphol (NL)
(74) Representative: van Bouwelen, Franciscus Maria

(57) **Abstract**

An assembly comprising a tubular element (100) having a circumferential groove (101) and a sealing ring (10). The sealing ring includes a base (20), a middle protrusion (30) that extends beyond the open end of the groove, first and second outer protrusions (40, 50), and first and second cavities (45, 55) between the base and the outer protrusions.

When the middle protrusion is moved toward a groove end wall, the opposite outer protrusion moves away from its end wall and out of the groove; fluid pressure in the corresponding cavity forces the base against the groove and enhances the seal.

## Description

### TECHNICAL FIELD

The present disclosure relates to seal assemblies for sealing a connection between tubular elements, and methods for forming a sealed connection using such assemblies.

### BACKGROUND

When two tubular elements such as two pipes, or a pipe and a pipe fitting (e.g. a socket or joint), are connected together, the annulus formed between the overlapping parts of the tubular elements needs to be sealed to prevent or inhibit leakage of fluid. Sealing rings are provided for sealing such an annulus.

Known sealing rings can fail for a number of reasons. For example, the position of the sealing ring may be unstable or unreliable, and when inserting one tubular element into the other tubular element, the sealing ring may flip, become dislodged, or otherwise break. Furthermore, accidental incorrect use of the sealing ring may result in a leaky connection.

There is therefore a need for more reliable and stable sealing assemblies which are less prone to failure, and less prone to accidental incorrect use by the user when installing the connection.

### SUMMARY

According to a first aspect, there is provided an assembly comprising a tubular element and a sealing ring, the tubular element comprising a circumferential groove defined by a groove floor, a first groove end wall, a second groove end wall opposite the first groove end wall and an open end opposite the groove floor. The sealing ring comprises a radial cross-sectional shape. The radial cross-sectional shape comprises: a base configured to be positioned in the groove in a pre-sealing configuration; a middle protrusion configured to extend from the base away from the groove floor of the tubular element, wherein the middle protrusion extends beyond the open end of the groove when the sealing ring is positioned in the groove in the pre-sealing configuration; first and second outer protrusions extending from the base and extending partially away from the groove floor when the sealing ring in positioned in the groove in the pre-sealing configuration; and a first cavity between the base and first outer protrusion and a second cavity between the base and second outer protrusion. The sealing ring is configured to deform such that when the middle protrusion is moved towards the second groove end wall to a first position, the first outer protrusion moves away from the first groove end wall and out beyond the open end of the circumferential groove, and when the middle protrusion is moved towards the first groove end wall to a second position, the second outer protrusion moves away from the second groove end wall and out beyond the open end of the circumferential groove. The first cavity is shaped such that in the first position, fluidic pressure applied to the first cavity forces a portion of the base against the circumferential groove and forces the first outer protrusion away from the first groove end wall, and the second cavity is shaped such that in the second position, fluidic pressure applied to the second cavity forces a portion of the base against the circumferential groove and forces the second outer protrusion away from the second groove end wall.

According to a second aspect, there is provided a method for forming a sealed connection using the assembly according to the first aspect, wherein the sealing ring is positioned in the groove, the method comprising moving the first and second tubular elements from the disconnected condition to the connected condition.

According to a third aspect, there is provided a sealing ring for the assembly according to the first aspect.

### BRIEF DESCRIPTION OF THE DRAWINGS

To enable better understanding of the present disclosure, and to show how the same may be carried into effect, reference will now be made, by way of example only, to the accompanying schematic drawings, in which:
Fig. 1A shows a schematic perspective view of a sealing ring for an assembly according to one or more embodiments shown and described herein.
Fig. 1B shows a schematic cutaway view of the sealing ring of Fig. 1A, illustrating a radial cross-sectional shape of the sealing ring.
Fig. 2 shows a schematic view of a radial cross-sectional shape of a sealing ring for an assembly according to one or more embodiments shown and described herein.
Fig. 3A shows a schematic cross-sectional side view of an assembly according to one or more embodiments shown and described herein.
Fig. 3B shows a schematic cross-sectional side view of an assembly in a sealed configuration according to one or more embodiments shown and described herein.
Fig. 4 shows a schematic cutaway side view of an assembly in a sealed configuration according to one or more embodiments shown and described herein.
Fig. 5 shows a schematic cross-sectional side view of an assembly in a sealed configuration according to one or more embodiments shown and described herein.

### DETAILED DESCRIPTION

As used herein, the term "tubular element" may be understood to mean any element comprising a tubular body for transporting fluids. The term includes piping, pipe joints, risers, pipe sockets, pipe fittings for coupling two pipes together, and the like. The tubular body may take any suitable shape, including cylindrical.

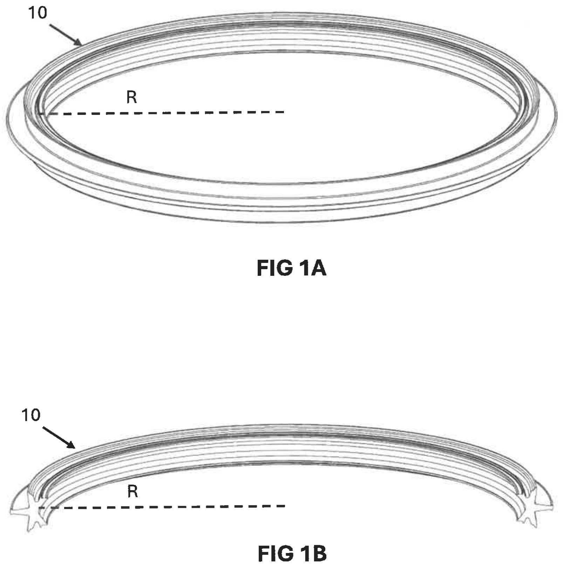

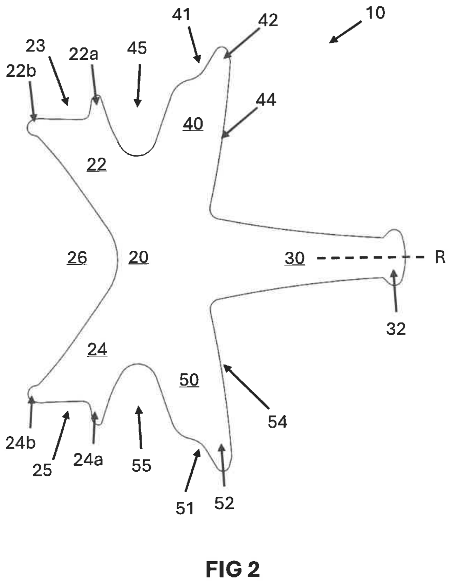

Fig. 1A shows a schematic perspective view of a sealing ring 10 for an assembly according to one or more embodiments. Fig. 1B shows a schematic cutaway view of the sealing ring 10 of Fig. 1A, illustrating a radial cross-sectional shape of the sealing ring taken along a radial axis R of the sealing ring 10. Fig. 2 shows a schematic view of a radial cross-sectional shape, taken along a radial axis R of a sealing ring 10 for an assembly according to one or more embodiments. The sealing ring 10 of Figs. 1A and 1B may have any or all of the features of the cross-sectional shape described below with reference to Fig. 2.

The sealing rings 10 described herein may have substantially the same radial cross-sectional shape about their entire circumference.

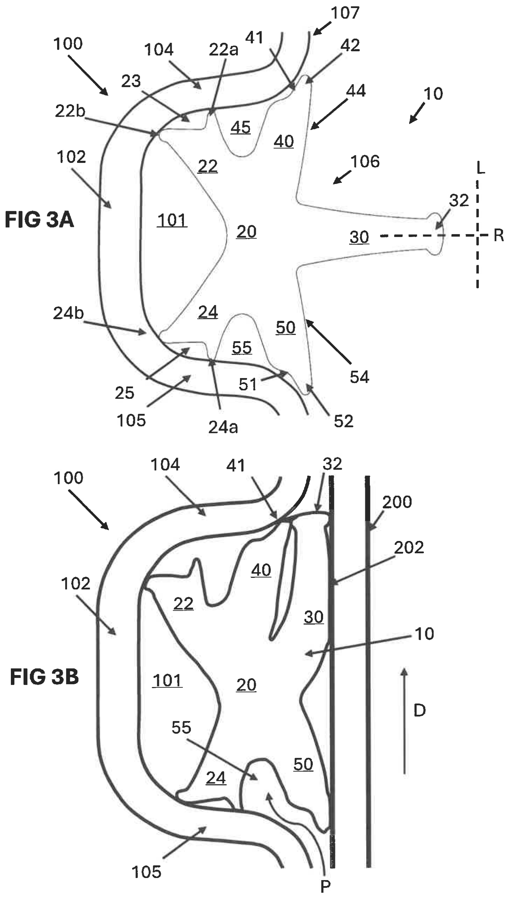

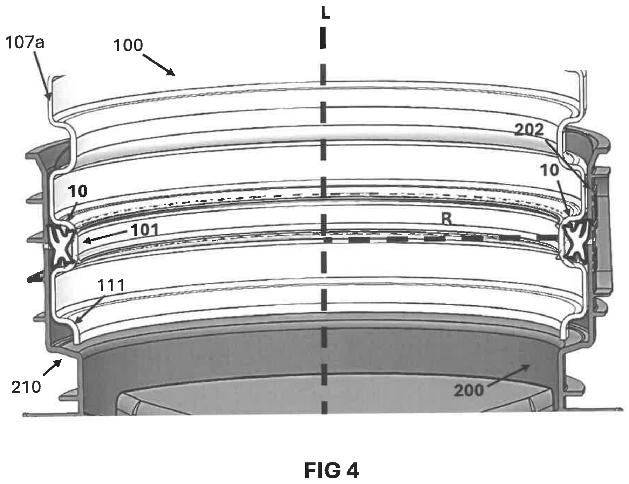

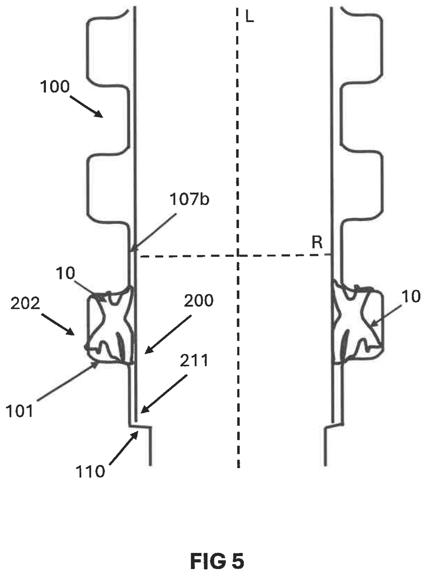

As shown in Fig. 2, the cross-sectional shape of sealing ring 10 comprises a base 20, a middle protrusion 30, a first outer protrusion 40 and a second outer protrusion 50. The middle protrusion 30 extends from the base at least partially along the radial axis R of the sealing ring 10. While in preferred embodiments, the middle protrusion 30 extends substantially entirely along the radial axis R as shown, in other embodiments the middle protrusion 30 may deviate partly from the radial axis R such that it extends at a non-zero angle to the radial axis R. The middle protrusion 30 may extend radially inwardly, such as shown in the sealing ring 10 of Figs. 1A and 1B, and as such may be configured to be located on an inner surface of a tubular element (such as shown and described with reference to Fig. 5). In alternative embodiments, the middle protrusion 30 may extend radially outwardly, and thus may be configured to be located on an outer surface of a tubular element (such as shown and described with reference to Fig. 4). In some embodiments, optionally the middle protrusion 30 may comprise a bulbous tip 32. The bulbous tip 32 allows for a localised higher contact pressure at the tip of the middle protrusion 30, assisting in sealing at the contact point of the bulbous tip 32 (for example in the configuration shown in Fig. 3B).

The first and second outer protrusions 40, 50 extend from the base 20 with the middle protrusion 30 situated between the first and second outer protrusions 40, 50, although it will be appreciated that in some embodiments further intervening features may be present between the outer protrusions 40, 50 and the middle protrusion 30. Each of the first and second outer protrusions 40, 50, extend partly along the radial direction R.

A first cavity 45 is formed between the base 20 and the first outer protrusion 40 and a second cavity 55 is formed between the base 20 and the second outer protrusion 50.

As illustrated in Fig. 2, in some embodiments the first outer protrusion 40 comprises a surface 41 facing the first cavity 45 which tapers towards a lip 42 at the end of the first outer protrusion 40, although it will be appreciated that lip 42 may be omitted. Similarly, in some embodiments the second outer protrusion 50 comprises a surface 51 facing the second cavity 55 which tapers towards a lip 52 at the end of the second outer protrusion 50, although it will be appreciated that lip 52 may be omitted. The surfaces 41 and 51 extend partly along the radial direction R, that is to say, the outermost parts of the surfaces 41 and 51 proximal the tip of the respective protrusions are radially displaced from the innermost parts of the surfaces 41 and 51 proximal the base 20, in a direction away from the base 20.

The first outer protrusion 40 also comprises a surface 44 on an opposing side of the first outer protrusion 40 to the cavity 45. The second outer protrusion 50 also comprises a surface 54 on an opposing side of the second outer protrusion 50 to the cavity 55. The surfaces 44 and 54 extend partly along the radial direction R, that is to say, the outermost parts of the surfaces 44 and 54 proximal the tip of the respective protrusions are radially displaced from the innermost parts of the surfaces 44 and 54 proximal the base 20, in a radial direction R away from the base 20. One or both of the surfaces 44 and 54 may be substantially smooth or flat in the radial cross-sectional view, that is, they may be free from bumps or lips, for ensuring a smooth, continuous contact surface with the surface 202 as shown in Fig. 3B.

One or both of the surfaces 44 and 54 may extend away from the base at an angle of between 65° and 85° to the radial axis, more preferably between 70° and 80°, as measured from the innermost point of the surface 44 or 54 to the outermost point of the surface 44 or 54. Similarly, a centre line of one or both of the outer protrusions 40, 50 may extend away from the base at an angle of between 65° and 85° to the radial axis, more preferably between 70° and 80°. The centreline may be measured along the centreline between surfaces 41 and 44 or 51 and 54, excluding the tapered portion and lip 42 or 52.

As the first outer protrusion 40 extends partly along the radial direction R, when a turning force is applied onto the first outer protrusion 40 by movement of the middle protrusion 30 towards the first outer protrusion 40, the first outer protrusion 40 rotates towards the perpendicular to the radial axis R, and thus widens in the direction perpendicular to the radial axis R. Similarly, as the second outer protrusion 50 extends partly along the radial direction R, when a turning force is applied onto the second outer protrusion 50 by movement of the middle protrusion 30 towards the second outer protrusion 50, the second outer protrusion 50 rotates towards the perpendicular to the radial axis R and thus widens in the direction perpendicular to the radial axis R. This is advantageous when the sealing ring 10 is placed in a groove as discussed in further detail herein with reference to Figs. 3A and 3B.

The base 20 optionally may comprise first and second legs 22, 24, and a base cavity 26 extending between them, although it will be appreciated that in other embodiments the base may not comprise the legs 22, 24 and/or the cavity 26. For example, the shape of the base may conform to the shape of a portion of a groove in which the sealing ring 10 is configured to be located. The provision of legs 22, 24 and base cavity 26 allows for the base 20 to seal against the groove 101 whilst reducing the amount of material used for the sealing ring 10.

Further, leg 22 may comprise first and second sealing lips 22a and 22b, with a cavity 23 formed therebetween, although in other embodiments one or both of sealing lips 22a, 22b may be omitted. Leg 24 may comprise first and second sealing lips 24a and 24b, with a cavity 25 formed therebetween, although in other embodiments one or both of sealing lips 24a, 24b may be omitted. When the sealing ring 10 is slightly oversized relative to the groove 101 in which it is place (see Figs. 3A and 3B), the sealing lips 22a, 22b, 24a, 24b are compressed against the groove 101 (the groove floor 101 for lips 22b, 24b and groove walls 104, 105 for lips 22a, 24a) and form circumferential seals.

Fig. 3A shows a schematic cross-sectional side view of an assembly according to one or more embodiments, comprising a sealing ring 10 and a tubular element 100. The tubular element 100 comprises a circumferential groove 101 defined by a circumferentially extending groove floor 102, first groove end wall 104, second groove end wall 105 opposite the first groove end wall 104 and open end 106 opposite the groove floor 102. The groove 101 may be formed in the surface 107 of the tubular element 100 which may be an inner surface or an outer surface of the tubular element (Fig. 4 shows a tubular element 100 with groove 101 formed on its outer surface 107a; Fig. 5 shows a tubular element 100 with groove 101 formed on its inner surface 107b). The groove floor 102, first groove end wall 104 and second groove end wall 105 form a continuous surface to define the groove 100.

The sealing ring 10 shown in Fig. 3A may be any of the sealing rings 10 described with reference to the preceding drawings.

As shown in Fig. 3A, the circumferential groove floor 102 also extends substantially perpendicular to the radial axis R in a longitudinal direction L of the tubular element 100, corresponding to the direction of travel of fluid through the tubular element 100, such that the groove floor 102 has a cylindrical surface. The first and second groove end walls 104, 105 extend away from the groove at a slight incline to the radial axis R, although it is appreciated that they may instead extend essentially at right angles from the groove floor 101. The groove floor 101 may also comprise rounded transitions at its peripheries to smoothly transition to the first and second groove end walls 104, 105, as seen in Fig. 3A. However, in other embodiments the groove floor 101 may not comprise rounded transitions and the interface between the groove floor 101 and the end walls 104, 105 may form a corner. Similarly, as seen in Fig. 3A, the groove end walls 104, 105 may comprise rounded transitions at the open end 106 of the groove 101, to smoothly transition to the surface 107 of the tubular element 100 into which the groove 101 is formed. However, in other embodiments, the groove end walls 104, 105 may not comprise rounded transitions at the open end 106.

The sealing ring 10 is configured to be positioned in the groove 101 and is shown in an pre-sealing configuration in Fig. 3A (that is, a configuration where the sealing ring 10 sits in the groove 101 prior to sealing an annulus between the tubular element 100 and another tubular element such as tubular element 200; a pre-sealing configuration may be considered a configuration in which the middle protrusion is undeformed such as shown in Fig. 3A, as opposed to the sealing configuration shown in Fig. 3B in which the middle protrusion has been deformed to a sealing position). In particular, the base 20 is essentially annular and is configured to be positioned in the groove 101 along its length (i.e. the entire circumferential length of the base 20 is shaped and sized such that it is configured to be positioned in the groove 101). When positioned in the groove 101, the base 20 contacts the groove 101 at one or more locations on the groove floor 102 and/or the groove walls 104, 105 in order to be retained in the groove 101. Preferably, a dimension of the base 20 (such as the distance between lips 22a and 24a) is slightly oversized compared to the groove 101, so that the sealing ring 10 is slightly compressed inside the groove 100 and is therefore retained in the groove 101 by a press-fit. Preferably, the outer protrusions 40, 50 are not oversized so that they easily move away from the groove walls 104, 105 when the middle protrusion 30 is moved to the other outer protrusion 40, 50. The tapered surfaces 41, 51, may partly conform to the curved transitions of the groove walls 104, 105 to assist in this function.

When placed in the groove 101, the middle protrusion 30 extends beyond the open end 106 of the groove 101. In such a configuration, the middle protrusion 30 is configured to interact with a surface of a second tubular element when the second tubular element overlaps the groove 101, as described in further detail herein with reference to Fig. 3B.

The sealing ring 10 is configured to deform such that when the middle protrusion 30 is moved towards the second groove end wall 105 to a first position, the first outer protrusion 40 moves away from the first groove end wall 104 and out beyond the open end 106 of the circumferential groove 101, and when the middle protrusion 30 is moved towards the first groove end wall 104 to a second position, the second outer protrusion 50 moves away from the second groove end wall 105 and out beyond the open end 106 of the circumferential groove 101.

The first cavity 45 is shaped such that in the first position, fluidic pressure applied to the first cavity forces a portion of the base 20 against the circumferential groove 101 (that is, one or more of the groove end walls 104, 105 and the groove floor 102) and forces the first outer protrusion 50 away from the first groove end wall 104, and the second cavity 55 is shaped such that in the second position, fluidic pressure applied to the second cavity 55 forces a portion of the base 20 against the circumferential groove 101 (that is, one or more of the groove end walls 104, 105 and the groove floor 102) and forces the second outer protrusion 50 away from the second groove end wall 105.

Fig. 3B shows a schematic cross-sectional side view of the assembly of Fig. 3A in a sealed configuration, according to one or more embodiments. In particular, in Fig. 3B, a second tubular element 200 has been connected to the first tubular element 100 by overlapping the tubular elements 100, 200 in a direction D (that is, by inserting one of the tubular elements 100, 200 into the other of the tubular elements 100, 200). By relative movement of the tubular elements 100, 200 in the direction D, the surface 202 of tubular element 200 facing the groove 101 interacts with the middle protrusion 30. The diameters of the tubular elements 100, 200 are closely matched, and the distance by which the middle protrusion 30 extends out of the open end 106 is selected so that the middle protrusion 30 contacts the surface 202. Thus, by friction, the middle protrusion 30 is moved to the second position as described above, that is, towards the first outer protrusion 40. In doing so, the second outer protrusion 50 moves away from the second groove end wall 105 and out beyond the open end 106 of the circumferential groove 101 so that surface 54 bears against the surface 202 thus forming a seal. Further, any fluid entering the annulus between the tubular elements 100, 200, is directed into cavity 55, which is shaped such that fluidic pressure (indicated by arrow P) applied to the second cavity 55 forces a portion of the base 20 against the circumferential groove 101 and forces the second outer protrusion 50 away from the second groove end wall 105. This force only serves to strengthen the seal between the surface 54 of the second outer protrusion 50.

Forcing the base 20 against the circumferential groove 101 also serves to improve the sealing function of the sealing ring 10 at the contact points between the base 20 and the groove 101. Thus, fluidic pressure received in the annulus actually improves the sealing between the tubular elements 100, 200.

Advantageously, it is noted that the same functionality of the sealing ring 10 is achieved in either direction of operation. In particular, if the second tubular element 200 were connected to the tubular element 100 in the opposite direction, middle protrusion 30 would be moved to the first position as described above, that is, towards the second outer protrusion 50. In doing so, the first outer protrusion 40 would move away from the first groove end wall 104 and out beyond the open end 106 of the circumferential groove 101 so that surface 44 bears against the surface 202 thus forming a seal. Further, any fluid entering the annulus between the tubular elements 100, 200, would be directed into cavity 45, which is shaped such that fluidic pressure (indicated by arrow P) applied to the cavity 45 forces a portion of the base 20 against the circumferential groove 101 and forces the first outer protrusion 40 away from the first groove end wall 104. Again, this force only serves to strengthen the seal between the surface 44 of the first outer protrusion 40. It is noted that whilst the sealing ring 10 illustrated is symmetric along the radial axis R, non-symmetric configurations are envisaged which still result in sealing in either direction, even if the performance of the sealing ring 10 would not be identical in either direction.

Accordingly, the sealing ring 10 of the present invention helps to avoid accidental incorrect use by a user installing the connection, such as by placing the sealing ring upside down, as a seal is formed in either direction.

It will be appreciated that the required length of the outer protrusions 40 and 50 in order to correctly bear against the surface 202 as described will depend on a number of factors, such as the distance from the groove 101 to the surface 202, the hardness of the material used for the sealing ring 10 and the overall cross-sectional shape of the sealing ring 10 which influence how the sealing ring 10 deforms when the middle protrusion 30 is moved to the first or second positions. The skilled person would readily be able to determine if a given sealing ring bears against the surface 202 as described, by routine experimentation.

The hardness of the material used for the sealing ring 10 may take any suitable hardness on the Shore A scale, such as between 30 to 70, more preferably 40 to 60, and even more preferably about 50.

In some embodiments, the lengths of the outer protrusions 40 and 50 approximately matches the length of the middle protrusion 30, for example the lengths of the outer protrusions may be within about 10% of the length of the middle protrusion 30. The length may be measured from the innermost point (proximal the middle protrusion 30) of the surfaces 44, 54, respectively, to the outermost point (proximal the tip) of the surfaces 44, 54, respectively. The length of the middle protrusion 30 may be measured from the base of the middle protrusion 30 to the end of the bulbous tip 30. As seen in Fig. 3B, the approximated length matching assists in forming a secondary seal such as shown at the top of the groove 101.

It is also noted that when the middle protrusion 30 moves towards outer protrusion 40 as shown in Fig. 3B, as the protrusion 40 extends partially away from the groove floor (that is, partially radially away), said protrusion 40 is rotated towards the perpendicular to the radial axis R, thus increasing its dimension in the longitudinal direction L. This results in said protrusion 40 being pushed against the groove wall 104, and thus inhibits the sealing ring 10 from flipping. The same is true of the second outer protrusion 50 when the middle protrusion 30 moves towards protrusion 50.

In some embodiments, the first outer protrusion 40 extends towards a terminus of the first groove end wall 104. Alternatively or additionally, the second outer protrusion 50 extends towards a terminus of the second groove end wall 105. This maximises the angle of inclination of the outer protrusions 40, 50 and thus maximises the increase in dimension in the longitudinal direction L when the outer protrusions 40, 50 are rotated by movement of the middle protrusion 30. This therefore optimises the resistance of the sealing ring 10 to flipping in the groove 101.

Further, in some embodiments and as shown in Figs. 3A and 3B, a tip portion (such as lip 42) of the first outer protrusion 40 extends beyond part of the first groove wall 104 in a lateral direction of the groove 101, such as into a curved transition region of the first groove wall 104 or to the surface 107. In such embodiments, the outer protrusion 40 partly abuts against the groove wall 104 in a radial direction when the middle protrusion 30 is rotated towards the outer protrusion 40, and therefore further inhibits the sealing ring 10 from flipping. Alternatively or additionally, a tip portion of the second outer protrusion 50 (such as lip 52) extends beyond the second groove wall 105 in a lateral direction of the groove 101, such as into a curved transition region of the second groove wall 105 or to the surface 107, so that the outer protrusion 50 partly abuts against the groove wall 105 in a radial direction when the middle protrusion 30 is rotated towards the outer protrusion 50, and therefore further inhibits the sealing ring 10 from flipping.

In some embodiments, the first outer protrusion 40 contacts the first groove end wall 104 when the sealing ring 10 is positioned in the groove 101 in the pre-sealing configuration. This supports the sealing ring 10 in the groove and inhibits slippage of the sealing ring 10 when moving to the sealed configuration. Alternatively or additionally, the second outer protrusion 50 contacts the second groove end wall 105 when the sealing ring 10 is positioned in the groove in the pre-sealing configuration.

As shown in Fig. 3A, in some embodiments, when the sealing ring 10 is positioned in the groove 101 in the pre-sealing configuration, a portion of the base 20 contacts the first groove wall 104 to inhibit lateral movement of the sealing ring 10 in the axial direction L towards the first groove wall 104. In embodiments where the base 20 comprises lip 22a, the lip 22a may be configured to contact the first groove wall 104 when the sealing ring 10 is positioned in the groove 101 in the pre-sealing configuration, to inhibit the lateral movement of the sealing ring 10 in the axial direction L towards the first groove wall 104.

Similarly, as also shown in Fig. 3A, when the sealing ring 10 is positioned in the groove 101 in the pre-sealing configuration, a portion of the base 20 may contact the second groove wall 105 to inhibit lateral movement of the sealing ring 101 in the axial direction L towards the second groove wall 105. In embodiments where the base 20 comprises lip 24a, the lip 24a may be configured to contact the second groove wall 105 when the sealing ring 10 is positioned in the groove 101 in the pre-sealing configuration, to inhibit the lateral movement of the sealing ring 10 in the axial direction L towards the second groove wall 105.

Further, as shown in Fig. 3A, when the sealing ring 10 is positioned in the groove in the pre-sealing configuration, a portion of the base 20 may contact the groove floor 102 to inhibit movement of the sealing ring 10 in a radial direction R towards the groove floor 102. In embodiments where the base 10 comprises one or both of sealing lips 22b, 24b, the sealing lip(s) 22b, 24b may contact the groove floor 102 when the sealing ring is positioned in the groove in the pre-sealing configuration, to inhibit the movement of the sealing ring 10 in the radial direction R towards the groove floor 102.

As shown in Fig. 3A, the base 20 may be configured to simultaneously contact the first groove wall 104 and the second groove wall 105 when the sealing ring 10 is positioned in the groove in the pre-sealing configuration so that lateral movement in either direction is inhibited. Thus, any deformation of the sealing ring 10 caused by movement of the middle protrusion 30 is transmitted preferentially to the outer protrusions 40, 50 as desired. In more particular embodiments and as shown in Fig. 3A, the base 20 may simultaneously contact the first groove wall 104, the second groove wall 105, and the groove floor 102 when the sealing ring 10 is positioned in the groove 101 in the pre-sealing configuration. In embodiments where the base 20 comprises the first leg 22 and the second leg 24, the legs 22, 24 may be configured to simultaneously contact, respectively, the first groove wall 104 and the second groove wall 105 when the sealing ring 10 is placed in the groove in the pre-sealing configuration as shown.

It is noted that as shown in Fig. 3A, in embodiments where the sealing ring 10 comprises legs 22, 24 and is placed in the groove 101, the first leg 22 may be configured to simultaneously contact the first groove wall 104 and the groove floor 102, and the second leg 24 may be configured to simultaneously contact the second groove wall 105 and the groove floor 102.

The radial cross-sectional shape of the sealing rings 10 disclosed herein is preferably symmetrical about a radial axis in the pre-sealing configuration, such as shown in Fig. 3A, although it will be appreciated that asymmetric shapes are also envisaged as falling within the scope of the invention. This symmetry ensures that an identical sealing performance of the sealing ring 10 is achieved, regardless of which orientation the sealing ring 10 is placed in the groove 101.

In preferred embodiments, when the sealing ring 10 is placed in the groove 101 and the middle protrusion 30 is moved to the first position, an end portion (e.g. the bulbous portion 32) of the middle protrusion 30 bears against an end portion (e.g. lip 51) of the second outer protrusion 50 to clamp the second outer protrusion 50 between the tubular element 100 and the middle protrusion 30. Alternatively or additionally, as shown in Fig. 3B, when the sealing ring 10 is placed in the groove 101 and the middle protrusion 30 is moved to the second position, an end portion (e.g. bulbous portion 32) of the middle protrusion 30 bears against an end portion (e.g. lip 41) of the first outer protrusion to clamp the first outer protrusion 40 between the tubular element 100 and the middle protrusion 30. This may be achieved by selecting an appropriate length of the middle protrusion 30 so that it reaches the end portion of the outer protrusion(s) to achieve the clamping effect. This further inhibits slippage of the sealing ring 10 within the groove 101. Further, the end portions of the middle protrusion 30 and respective outer protrusion 40, 50 form a secondary seal between the tubular elements 100, 200 as shown in Fig. 3B, improving the sealing function of the sealing ring 10.

As previously noted, the tubular elements 100, 200 may be any suitable tubular elements configured to connect together. The tubular element 100 may be configured to be inserted into the tubular element 200, such as shown in Fig. 4, or the tubular element 200 may be configured to be inserted into the tubular element 100, as shown in Fig. 5. In preferred embodiments, the tubular element 100 is a riser and the tubular element 200 is a socket of an inspection chamber (for example an inspection chamber of a rainwater drainage system, such as a manhole).

Fig. 4 shows a schematic cutaway side view of an assembly in a sealed configuration according to one or more embodiments. The assembly comprises a tubular element 100 having a sealing ring 10. The tubular element 100 and sealing ring 10 may be the tubular elements 100 and sealing rings 10 previously described with respect to the preceding figures. The tubular elements 100, 200 are movable from a disconnected condition (not shown) to a connected condition as shown in Fig. 4 in which a surface 202 of the second tubular element 200 overlaps the groove 101, wherein when the first and second tubular elements 100, 200 are moved from the disconnected condition to the connected condition, the second tubular element 200 displaces the middle protrusion 30 from the pre-sealing configuration such as described with reference to Fig. 3A, towards the first or second position, and the first or second outer protrusion 40, 50 moves away from the first or second groove end wall 104, 105, respectively, and bears against the surface 202 of the second tubular element 200 to seal the annulus between the first and second tubular elements 100, 200. As shown in Fig. 4, the second tubular element 200 may have a larger diameter than the tubular element 100 in the region of overlap, and the sealing ring 10 may be situated in a groove 101 formed on the outer surface 107a of the tubular element 100, such that the tubular element 100 is inserted into the second tubular element 200 to form the seal. The second tubular element 200 may comprise a shoulder 210 for abutment with an end 111 of the tubular element 100, to prevent movement of the tubular element 100 beyond the connected position shown.

Fig. 5 shows a schematic cross-sectional side view of an assembly in a sealed configuration according to one or more embodiments. The assembly comprises a tubular element 100 having a sealing ring 10. The tubular element 100 and sealing ring 10 may be the tubular elements 100 and sealing rings 10 previously described with respect to the preceding figures. The tubular elements 100, 200 are movable from a disconnected condition (not shown) to a connected condition as shown in Fig. 5 in which a surface 202 of the second tubular element 200 overlaps the groove 101, wherein when the first and second tubular elements 100, 200 are moved from the disconnected condition to the connected condition, the second tubular element 200 displaces the middle protrusion 30 from the pre-sealing configuration such as described with reference to Fig. 3A, towards the first or second position, and the first or second outer protrusion 40, 50 moves away from the first or second groove end wall 104, 105, respectively, and bears against the surface 202 of the second tubular element 200 to seal the annulus between the first and second tubular elements 100, 200. As shown in Fig. 5, the first tubular element 100 may have a larger diameter than the tubular element 200 in the region of overlap, and the sealing ring 10 may be situated in a groove 101 formed on the inner surface 107b of the tubular element 100, such that the tubular element 100 is inserted into the second tubular element 100 to form the seal. The first tubular element 100 may comprise a shoulder 110 for abutment with an end 211 of the tubular element 200, to prevent movement of the tubular element 200 beyond the connected position shown.

The present invention also relates to a method for forming a sealed connection using the assembly according to any of the embodiments disclosed herein, particularly with reference to Figs. 1A to 5, wherein the sealing ring is positioned in the groove, the method comprising moving the first and second tubular elements from the disconnected condition to the connected condition.

It will be appreciated that the cross-sectional shape of the sealing ring shown in the figures is one example, and the shape of each feature of the sealing ring may differ without departing from the scope of the invention of the appended claims. For example, the sealing ring may additionally comprise one or more further protrusions or legs and the disclosure is not limited to the number of protrusions shown and described in the specific embodiments described herein.

It will also be appreciated that the lips disclosed herein (e.g. lips 42, 22a, 22b, 24a, 24b, 52) may take any suitable cross-sectional shape, such as rounded, triangular, etc.

It will also be appreciated that the assemblies of the present invention may comprise more than one circumferential groove, each comprising a sealing ring according to the invention.

Further, it will be appreciated that in some embodiments, the pre-sealing configuration of the sealing ring does not necessarily require that the sealing ring is in an undeformed state. For example, when positioned in the groove in the pre-sealing configuration, the sealing ring may be in a pre-tensioned state wherein the sealing ring is slightly stretched in the circumferential direction.

The tubular elements disclosed herein may be made of any suitable material as known in the art, including but not limited to polymers, resin, dimensionally stable rubber, metal, or combinations thereof.

The sealing rings disclosed herein may be made of any suitable material, and in particular any suitable elastic or resiliently deformable material. For example, the sealing rings described herein may be made of any suitable elastomer or rubber, for example EPDM, SBR, NBR or any suitable thermoplastic elastomer. The sealing rings may be manufactured using any suitable method as is known in the art, such as by compression molding, injection molding, or transfer molding. Alternatively, the sealing rings may be manufactured by extrusion and subsequently welding or gluing the ends of the extruded material to form the sealing ring.

All of the above are fully within the scope of the present disclosure, and are considered to form the basis for alternative embodiments in which one or more combinations of the above-described features are applied, without limitation to the specific combination disclosed above.

In light of this, there will be many alternatives which implement the teaching of the present disclosure. It is expected that one skilled in the art will be able to modify and adapt the above disclosure to suit its own circumstances and requirements within the scope of the present disclosure, while retaining some or all technical effects of the same, either disclosed or derivable from the above, in light of his common general knowledge in this art. All such equivalents, modifications or adaptations fall within the scope of the present disclosure.

The following clauses also form part of the present disclosure:
1. An assembly comprising a tubular element and a sealing ring, the tubular element comprising a circumferential groove defined by a groove floor, a first groove end wall, a second groove end wall opposite the first groove end wall and an open end opposite the groove floor, the sealing ring comprising a radial cross-sectional shape, the radial cross-sectional shape comprising:
   a base configured to be positioned in the groove in a pre-sealing configuration;
   a middle protrusion configured to extend from the base away from the groove floor of the tubular element, wherein the middle protrusion extends beyond the open end of the groove when the sealing ring is positioned in the groove in the pre-sealing configuration;
   first and second outer protrusions extending from the base and extending partially away from the groove floor when the sealing ring in positioned in the groove in the pre-sealing configuration; and
   a first cavity between the base and first outer protrusion and a second cavity between the base and second outer protrusion;

   wherein the sealing ring is configured to deform such that when the middle protrusion is moved towards the second groove end wall to a first position, the first outer protrusion moves away from the first groove end wall and out beyond the open end of the circumferential groove, and when the middle protrusion is moved towards the first groove end wall to a second position, the second outer protrusion moves away from the second groove end wall and out beyond the open end of the circumferential groove;
   wherein the first cavity is shaped such that in the first position, fluidic pressure applied to the first cavity forces a portion of the base against the circumferential groove and forces the first outer protrusion away from the first groove end wall, and the second cavity is shaped such that in the second position, fluidic pressure applied to the second cavity forces a portion of the base against the circumferential groove and forces the second outer protrusion away from the second groove end wall.
2. The assembly of clause 1, wherein the first outer protrusion extends towards a terminus of the first groove end wall when positioned in the groove; and/or the second outer protrusion extends towards a terminus of the second groove end wall when positioned in the groove.
3. The assembly of clause 2, wherein when the sealing ring is positioned in the groove, a tip portion of the first outer protrusion extends beyond the first groove wall in a lateral direction of the groove; and/or a tip portion of the second outer protrusion extends beyond the second groove wall in a lateral direction of the groove.
4. The assembly of any preceding clause, wherein the first outer protrusion contacts the first groove end wall when the sealing ring is positioned in the groove in the pre-sealing configuration; and/or wherein the second outer protrusion contacts the second groove end wall when the sealing ring is positioned in the groove in the pre-sealing configuration.
5. The assembly of any preceding clause, wherein the first outer protrusion comprises a surface facing the first cavity which tapers towards a lip at the end of the first outer protrusion; and/or the second outer protrusion comprises a surface facing the second cavity which tapers towards a lip at the end of the second outer protrusion.
6. The assembly of any preceding clause, wherein, when the sealing ring is positioned in the groove in the pre-sealing configuration, a portion of the base contacts the first groove wall to inhibit lateral movement of the sealing ring in an axial direction towards the first groove wall.
7. The assembly of clause 6, wherein the base comprises a lip configured to contact the first groove wall when the sealing ring is positioned in the groove in the pre-sealing configuration, to inhibit the lateral movement of the sealing ring in the axial direction towards the first groove wall.
8. The assembly of any preceding clause, wherein, when the sealing ring is positioned in the groove in the pre-sealing configuration, a portion of the base contacts the second groove wall to inhibit lateral movement of the sealing ring in an axial direction towards the second groove wall.
9. The assembly of clause 8, wherein the base comprises a lip configured to contact the second groove wall when the sealing ring is positioned in the groove in the pre-sealing configuration, to inhibit the lateral movement of the sealing ring in the axial direction towards the second groove wall.
10. The assembly of any preceding clause, wherein, when the sealing ring is positioned in the groove in the pre-sealing configuration, a portion of the base contacts the groove floor to inhibit movement of the sealing ring in a radial direction towards the groove floor.
11. The assembly of clause 10, wherein the base comprises one or more sealing lips configured to contact the groove floor when the sealing ring is positioned in the groove in the pre-sealing configuration, to inhibit the movement of the sealing ring in the radial direction towards the groove floor.
12. The assembly of any preceding clause, wherein the base is configured to simultaneously contact the first groove wall and the second groove wall when the sealing ring is positioned in the groove in the pre-sealing configuration.
13. The assembly of clause 12, wherein the base is configured to simultaneously contact the first groove wall, the second groove wall, and the groove floor when the sealing ring is positioned in the groove in the pre-sealing configuration.
14. The assembly of any preceding clause, wherein the base comprises a first leg, a second leg and a base cavity between the first leg and the second leg.
15. The assembly of clause 14, wherein the first leg comprises a lip configured to contact the first groove wall when the sealing ring is positioned in the groove in the pre-sealing configuration and/or a lip configured to contact the groove floor when the sealing ring is positioned in the groove in the pre-sealing configuration.
16. The assembly of clause 14 or 15, wherein the second leg comprises a lip configured to contact the second groove wall when the sealing ring is positioned in the groove in the pre-sealing configuration and/or a lip configured to contact the groove floor when the sealing ring is positioned in the groove in the pre-sealing configuration.
17. The assembly of any of clauses 14 to 16, wherein the first leg and the second leg are configured to simultaneously contact, respectively, the first groove wall and the second groove wall when the sealing ring is placed in the groove in the pre-sealing configuration.
18. The assembly of clause 17, wherein when the sealing ring is placed in the groove, the first leg is configured to simultaneously contact the first groove wall and the groove floor, and the second leg is configured to simultaneously contact the second groove wall and the groove floor.
19. The assembly of any preceding clause, wherein the middle protrusion comprises a bulbous tip.
20. The assembly of any preceding clause, wherein the radial cross-sectional shape is symmetrical about a radial axis.
21. The assembly of any preceding clause, wherein the sealing ring comprises the radial cross-sectional shape about the entire circumference of the sealing ring.
22. The assembly of any preceding clause, wherein when the sealing ring is placed in the groove and the middle protrusion is moved to the first position, an end portion of the middle protrusion bears against an end portion of the second outer protrusion to clamp the second outer protrusion between the tubular element and the middle protrusion.
23. The assembly of any preceding clause, wherein when the sealing ring is placed in the groove and the middle protrusion is moved to the second position, an end portion of the middle protrusion bears against an end portion of the first outer protrusion to clamp the first outer protrusion between the tubular element and the middle protrusion.
24. The assembly of any preceding clause, wherein the sealing ring comprises or consists of a rubber, preferably EPDM.
25. The assembly of any preceding clause, wherein the assembly is in an assembled condition in which the sealing ring is positioned in the groove.
26. The assembly of any preceding clause, wherein the groove is situated on an outer surface of the tubular element and the middle protrusion extends outwards from the outer surface.
27. The assembly of any preceding clause, wherein the groove is situated on an inner surface of the tubular element and the middle protrusion extends inwards from the inner surface.
28. The assembly of any preceding clause, wherein the tubular element is a riser configured to be inserted into a socket of an inspection chamber.
29. The assembly of any preceding clause, wherein the tubular element is a first tubular element, the assembly further comprising a second tubular element, the first and second tubular elements movable from a disconnected condition to a connected condition in which a surface of the second tubular element overlaps the groove, wherein when the sealing ring is positioned in the groove and the first and second tubular elements are moved from the disconnected condition to the connected condition, the second tubular element displaces the middle protrusion towards the first or second position, and the first or second outer protrusion moves away from the first or second groove end wall, respectively, and bears against a surface of the second tubular element to seal an annulus between the first and second tubular elements.
30. The assembly of clause 29, wherein the assembly is in the disconnected condition.
31. The assembly of clause 29, wherein the assembly is in the connected condition.
32. The assembly of any of clauses 29 to 31, wherein the second tubular member is a socket of an inspection chamber, and the first tubular member is a riser configured to be inserted into the socket.
33. A method for forming a sealed connection using the assembly according to any of clauses 29 to 32, wherein the sealing ring is positioned in the groove, the method comprising moving the first and second tubular elements from the disconnected condition to the connected condition.
34. A sealing ring for the assembly according to any of clauses 1 to 32.

## Claims

1. An assembly comprising a tubular element and a sealing ring, the tubular element comprising a circumferential groove defined by a groove floor, a first groove end wall, a second groove end wall opposite the first groove end wall and an open end opposite the groove floor, the sealing ring comprising a radial cross-sectional shape, the radial cross-sectional shape comprising:
a base configured to be positioned in the groove in a pre-sealing configuration;
a middle protrusion configured to extend from the base away from the groove floor of the tubular element, wherein the middle protrusion extends beyond the open end of the groove when the sealing ring is positioned in the groove in the pre-sealing configuration;
first and second outer protrusions extending from the base and extending partially away from the groove floor when the sealing ring in positioned in the groove in the pre-sealing configuration; and
a first cavity between the base and first outer protrusion and a second cavity between the base and second outer protrusion;
wherein the sealing ring is configured to deform such that when the middle protrusion is moved towards the second groove end wall to a first position, the first outer protrusion moves away from the first groove end wall and out beyond the open end of the circumferential groove, and when the middle protrusion is moved towards the first groove end wall to a second position, the second outer protrusion moves away from the second groove end wall and out beyond the open end of the circumferential groove;
wherein the first cavity is shaped such that in the first position, fluidic pressure applied to the first cavity forces a portion of the base against the circumferential groove and forces the first outer protrusion away from the first groove end wall, and the second cavity is shaped such that in the second position, fluidic pressure applied to the second cavity forces a portion of the base against the circumferential groove and forces the second outer protrusion away from the second groove end wall.

2. The assembly of claim 1, wherein the first outer protrusion extends towards a terminus of the first groove end wall when positioned in the groove; and/or the second outer protrusion extends towards a terminus of the second groove end wall when positioned in the groove, optionally wherein when the sealing ring is positioned in the groove, a tip portion of the first outer protrusion extends beyond the first groove wall in a lateral direction of the groove; and/or a tip portion of the second outer protrusion extends beyond the second groove wall in a lateral direction of the groove.

3. The assembly of any preceding claim, wherein the first outer protrusion contacts the first groove end wall when the sealing ring is positioned in the groove in the pre-sealing configuration; and/or wherein the second outer protrusion contacts the second groove end wall when the sealing ring is positioned in the groove in the pre-sealing configuration.

4. The assembly of any preceding claim, wherein the first outer protrusion comprises a surface facing the first cavity which tapers towards a lip at the end of the first outer protrusion; and/or the second outer protrusion comprises a surface facing the second cavity which tapers towards a lip at the end of the second outer protrusion.

5. The assembly of any preceding claim, wherein, when the sealing ring is positioned in the groove in the pre-sealing configuration, a portion of the base contacts the first groove wall to inhibit lateral movement of the sealing ring in an axial direction towards the first groove wall, optionally wherein the base comprises a lip configured to contact the first groove wall when the sealing ring is positioned in the groove in the pre-sealing configuration, to inhibit the lateral movement of the sealing ring in the axial direction towards the first groove wall.

6. The assembly of any preceding claim, wherein, when the sealing ring is positioned in the groove in the pre-sealing configuration, a portion of the base contacts the second groove wall to inhibit lateral movement of the sealing ring in an axial direction towards the second groove wall, optionally wherein the base comprises a lip configured to contact the second groove wall when the sealing ring is positioned in the groove in the pre-sealing configuration, to inhibit the lateral movement of the sealing ring in the axial direction towards the second groove wall.

7. The assembly of any preceding claim, wherein, when the sealing ring is positioned in the groove in the pre-sealing configuration, a portion of the base contacts the groove floor to inhibit movement of the sealing ring in a radial direction towards the groove floor, optionally wherein the base comprises one or more sealing lips configured to contact the groove floor when the sealing ring is positioned in the groove in the pre-sealing configuration, to inhibit the movement of the sealing ring in the radial direction towards the groove floor.

8. The assembly of any preceding claim, wherein the base is configured to simultaneously contact the first groove wall and the second groove wall when the sealing ring is positioned in the groove in the pre-sealing configuration, optionally wherein the base is configured to simultaneously contact the first groove wall, the second groove wall, and the groove floor when the sealing ring is positioned in the groove in the pre-sealing configuration.

9. The assembly of any preceding claim, wherein the base comprises a first leg, a second leg and a base cavity between the first leg and the second leg, preferably wherein the first leg and the second leg are configured to simultaneously contact, respectively, the first groove wall and the second groove wall when the sealing ring is placed in the groove in the pre-sealing configuration, more preferably wherein when the sealing ring is placed in the groove, the first leg is configured to simultaneously contact the first groove wall and the groove floor, and the second leg is configured to simultaneously contact the second groove wall and the groove floor.

10. The assembly of claim 9, wherein the first leg comprises a lip configured to contact the first groove wall when the sealing ring is positioned in the groove in the pre-sealing configuration and/or a lip configured to contact the groove floor when the sealing ring is positioned in the groove in the pre-sealing configuration, and/or wherein the second leg comprises a lip configured to contact the second groove wall when the sealing ring is positioned in the groove in the pre-sealing configuration and/or a lip configured to contact the groove floor when the sealing ring is positioned in the groove in the pre-sealing configuration.

11. The assembly of any preceding claim, wherein the radial cross-sectional shape is symmetrical about a radial axis.

12. The assembly of any preceding claim, wherein when the sealing ring is placed in the groove and the middle protrusion is moved to the first position, an end portion of the middle protrusion bears against an end portion of the second outer protrusion to clamp the second outer protrusion between the tubular element and the middle protrusion, and/or wherein when the sealing ring is placed in the groove and the middle protrusion is moved to the second position, an end portion of the middle protrusion bears against an end portion of the first outer protrusion to clamp the first outer protrusion between the tubular element and the middle protrusion.

13. The assembly of any preceding claim, wherein the groove is situated on an outer surface of the tubular element and the middle protrusion extends outwards from the outer surface, or wherein the groove is situated on an inner surface of the tubular element and the middle protrusion extends inwards from the inner surface.

14. The assembly of any preceding claim, wherein the tubular element is a riser configured to be inserted into a socket of an inspection chamber.

15. The assembly of any preceding claim, wherein the tubular element is a first tubular element, the assembly further comprising a second tubular element, the first and second tubular elements movable from a disconnected condition to a connected condition in which a surface of the second tubular element overlaps the groove, wherein when the sealing ring is positioned in the groove and the first and second tubular elements are moved from the disconnected condition to the connected condition, the second tubular element displaces the middle protrusion towards the first or second position, and the first or second outer protrusion moves away from the first or second groove end wall, respectively, and bears against a surface of the second tubular element to seal an annulus between the first and second tubular elements, optionally wherein the second tubular member is a socket of an inspection chamber, and the first tubular member is a riser configured to be inserted into the socket.

16. A method for forming a sealed connection using the assembly according to claim 15, wherein the sealing ring is positioned in the groove, the method comprising moving the first and second tubular elements from the disconnected condition to the connected condition.

17. A sealing ring for the assembly according to any of claims 1 to 15.
